# EUROPEAN PATENT SPECIFICATION

(11) **EP 3 337 270 B1**
(45) Date of publication and mention of the grant of the patent: **21.02.2024**
(21) Application number: 16834466.1
(22) Date of filing: 17.05.2016
(51) Int. Cl.: H04W 74/00, H04W 76/10, H04W 76/15, H04W 36/00, H04W 88/06, H04W 36/28

(54) **CONTROL PLANE UPLINK SIGNALING TRANSMISSION METHOD AND SYSTEM**
UPLINK-SIGNALÜBERTRAGUNGSVERFAHREN AUF STEUEREBENE UND SYSTEM
PROCÉDÉ ET SYSTÈME DE TRANSMISSION DE SIGNALISATION DE LIAISON MONTANTE DE PLAN DE COMMANDE

(30) Priority: 12.08.2015 CN 201510494245
(43) Date of publication of application: 20.06.2018
(73) Proprietor: ZTE Corporation, Shenzhen, Guangdong 518057 (CN)
(72) Inventor: ZHAO, Jie, Shenzhen, Guangdong 518057 (CN)
(74) Representative: Wallinger Ricker Schlotter Tostmann
(86) International application number: PCT/CN2016/082345
(87) International publication number: WO 2017/024841

(56) References cited:
- EP-A1- 2 723 134
- CN-A- 1 997 206
- CN-A- 102 860 071
- CN-A- 104 584 463
- US-A1- 2011 319 072
- US-A1- 2013 016 696
- US-A1- 2013 208 662
- US-A1- 2013 329 694
- US-A1- 2015 092 748
- US-A1- 2015 208 311
- NORTEL: "Uplink Adaptive Transmission with TP", 3GPP DRAFT; R1-061235, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20060502, 2 May 2006 (2006-05-02), XP050102116, [retrieved on 2006-05-02]
- 3RD GENERATION PARTNERSHIP PROJECT: 'Technical Specification Group Radio Access Network; Evolved Universal Terrestrial Radio Access (E-UTRA); Radio Resource Control (RRC); Protocol specification (Release 12' 3GPP TS 36.331 30 June 2015, pages 40 - 82, XP050986363
- ZTE ET AL.: 'Coordinated Service Experience for Traffic Steering' 3GPP TSG-RAN3 MEETING #87 13 February 2015, pages 1 - 8, XP050937005

## Description

### TECHNICAL FIELD

The disclosure relates to, but is not limited to, the field of wireless communications, and in particular to a method and system for transmitting control plane uplink signaling.

### BACKGROUND

The reason that a wireless communication network cannot ensure connectivity anytime and anywhere is that the currently commercial wireless communication technology cannot meet requirements of users in an area with poor coverage, extreme interference or network resource overload. A 5th Generation mobile communication technology (5G) network in the future is required to meet requirements of Internet of Things, vehicle network, remote message processing and automation domain. The current wireless communication network cannot assure reliability sufficiently, so there is no application of the above fields currently. Ultra-Reliably/Critical Machine Type Communication (U-MTC) is an important objective of the 5G network, whose requirements are very different from that of the existing communication used by people. The core requirements of the U-MTC are ultra-reliability and ultralow delay. The U-MTC does not require high data throughput.

Architectural features of the current 2nd Generation mobile communication technology (2G) network, 3rd Generation mobile communication technology (3G) network and 4th Generation mobile communication technology (4G) network are that all service requirements are satisfied by a network architecture form, and design objectives of the networks are mainly to satisfy wireless communication requirements of people. However, an objective of the 5G network is further to satisfy wireless communication requirements of things based on that the 4G network satisfies wireless broadband communication requirements of people, which causes a great change of technical indexes in different scenarios; different network architecture forms are required for different scenarios, and a network architecture form cannot adapt to all service requirements. At the same time, a Network Function Virtualization (NFV) technology and a Software Defined Network (SDN) technology develop rapidly, which finally causes a reconstructed 5G network architecture. The 5G network has the following key features: (1) the whole network is clouded; (2) the network can be sliced flexibly (network optimization and network isolation facing use-case scenarios is supported); (3) network functions and service requirements are formed by arranging and deploying (different network architecture forms are required for different scenarios); and (4) a deployment granularity of the network is refined from a level of logical entity to a level of function component.

At present, a 5G architecture presented in some exposed documents by some organizations (e.g. Metis) researching the 5G has the following features: focusing on network functions rather than network entities/nodes, componentization of network functions, organizing function components based on cases, and defining interfaces as interfaces of the function components rather than the network entities.

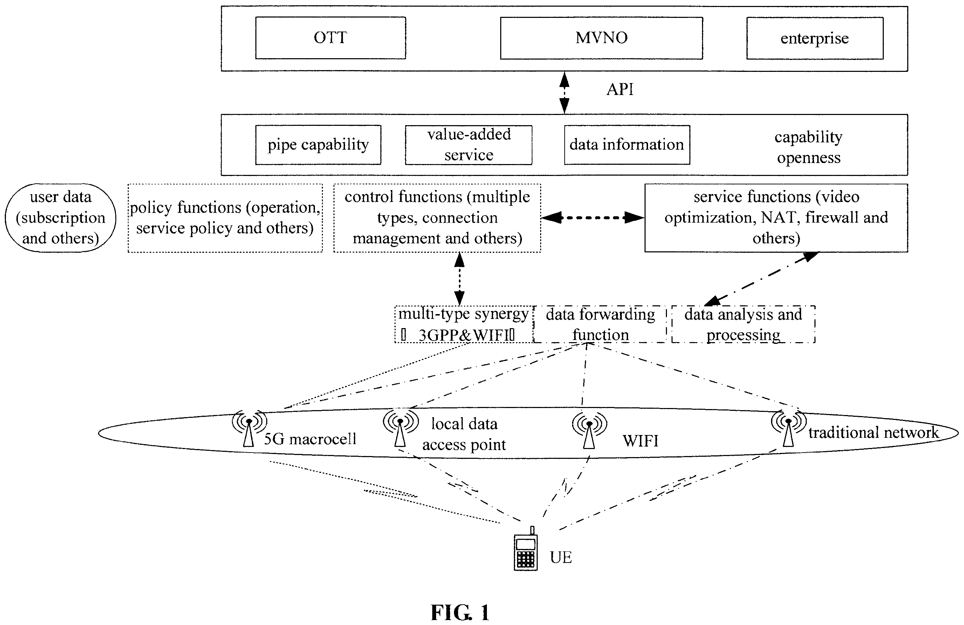

FIG. 1 is a 5G architecture diagram based on a network function in the related art. As shown in FIG. 1, a piece of User Equipment (UE) can access a network to perform wireless communication through multiple Radio Access Technologies (RAT), and the network can provide application program interfaces for operators, enterprises and others, thereby implementing capability openness. Herein, a chain dotted line represents a data flow, and a broken line represents a control information flow.

Functions of the 5G are mainly divided into a few parts as follows: Reliable Service Composition (RSC), Central Management Entities (CME), Radio Node Management (RNM) and Air Interface (Al). The above great function can be subdivided into multiple small function components, and the small function components can be deployed at different positions (logical entities) according to needs.

Because service forms and scenarios of the 5G are diversified, for satisfying various requirements, many types of cells are required. In terms of network types, there will be a 2G cell, a 3G cell, a 4G cell, a 5G cell and a Wireless-Fidelity (WiFi) Access Point (AP); in terms of coverage area, there will be a macrocell, a microcell and a Ultra Densen Network (UDN) cell, so there is a problem of convergence of multiple RATs.

D1 (US2013016696) discloses a method and apparatus for multiple radio access technology (multi-RAT) access mode operation for a wireless transmit/receive unit (WTRU).

D2 ("Uplink Adaptive Transmission with TP" 3GPP DRAFR; R1-061235, 3RD generation partnership project (3GPP), mobile competence centre; 650, route des lucioles; F-06921 shophia-anripolis cedex; france, vol. ran wg1, no. shanghai, China; 20060502, 2 May 2006, XP050102116) discloses a uplink transmission mode adaptation scheme to improve the coverage by Tx diversity and Rx diversity and enhance the system capacity by spatial multiplexing.

### SUMMARY

The following is an overview of the theme elaborated in this application. The overview is not intended to limit the scope of protection of the claims.

An embodiment of the disclosure provides a method and system for transmitting control plane uplink signaling, which can implement Ultra-Reliable Communication (URC) of control plane uplink signaling during multi-RAT hybrid networking.

The present invention is defined by independent claims, to which reference should now be made. Further enhancements are characterized by the dependent claims.

Through the embodiment of the disclosure, during multi-RAT hybrid networking, it is possible to perform URC transmission to the control plane uplink signaling of a user aiming at a URC requirement of the user, thereby implementing URC of the control plane uplink signaling during the multi-RAT hybrid networking.

Other aspects can be understood after the accompanying drawings and detailed descriptions are read and understood.

### BRIEF DESCRIPTION OF DRAWINGS

FIG. 1 is a 5G architecture diagram based on a network function in the related art.
FIG. 2 is a flowchart of a method for transmitting control plane uplink signaling provided by an embodiment of the disclosure.
FIG. 3 is a flowchart of a method for transmitting control plane uplink signaling provided by an embodiment of the disclosure.
FIG. 4 is a component module diagram of a system for transmitting control plane uplink signaling, which is applied to a wireless communication network system, provided by an embodiment of the disclosure.
FIG. 5 is a component module diagram of a system for transmitting control plane uplink signaling, which is applied to a piece of UE, provided by an embodiment of the disclosure.
FIG. 6 is an application diagram of an embodiment of the disclosure.
FIG. 7 is a flowchart of a method for transmitting control plane uplink signaling provided by an example 1 of the disclosure.
FIG. 8 is a flowchart of a method for transmitting control plane uplink signaling provided by an example 2 of the disclosure.

### DETAILED DESCRIPTION

Embodiments of the disclosure are elaborated below in combination with the accompanying drawings.

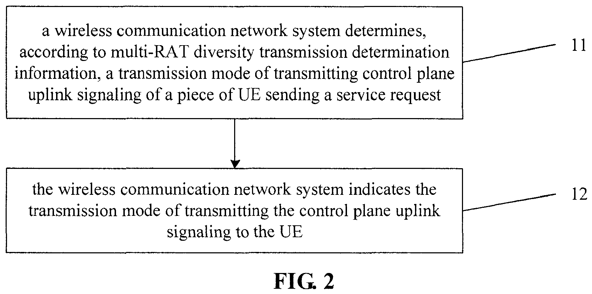

FIG. 2 is a flowchart of a method for transmitting control plane uplink signaling provided by an embodiment of the claimed invention. As shown in FIG. 2, the method for transmitting control plane uplink signaling provided by the present embodiment includes the following steps.

In S11, a wireless communication network system determines, according to multi-RAT diversity transmission determination information, a transmission mode of transmitting control plane uplink signaling of a piece of UE sending a service request.

Herein, the multi-RAT diversity transmission determination information includes multi-RAT control plane uplink signaling diversity capability information of the UE and any one or more of the following information:
type information of the UE;
type information of a user which initiates a service request through the UE;
service type information of the user;
measurement report information of the UE; and
multi-RAT control plane uplink signaling diversity capability information of a wireless communication network.

Before S11, the method further includes that: the wireless communication network system establishes an Al connection with the UE using an RAT, and acquires the multi-RAT control plane uplink signaling diversity capability information of the UE and any one or more of the following information through the Al connection:
the type information of the UE;
the type information of the user which initiates the service request through the UE;
the service type information of the user.

Moreover, after the wireless communication network system establishes the Al connection with the UE using an RAT, the wireless communication network system can require the UE to report the measurement report information.

In S12, the wireless communication network system indicates the transmission mode of transmitting the control plane uplink signaling to the UE.

Herein, when S12 is performed, the method further includes that: the wireless communication network system reconfigures a Radio Resource Control (RRC) connection of the UE according to the determined transmission mode of transmitting the control plane uplink signaling of the UE.

Herein, when the determined transmission mode of transmitting the control plane uplink signaling of the UE is multi-RAT diversity transmission, reconfiguring, by the wireless communication network system, the RRC connection of the UE according to the determined transmission mode of transmitting the control plane uplink signaling of the UE includes that:
when the wireless communication network system establishes the Al connection with the UE using only one RAT originally, the wireless communication network system keeps the Al connection using the RAT, and establishes a new Al connection with the UE using at least one other RAT;
when the wireless communication network system establishes the AI connections with the UE using at least two RATs originally, the wireless communication network system keeps the AI connection which is established with the UE using one RAT originally, deletes the AI connection which is established with the UE using the other RAT originally, and establishes a new Al connection with the UE using at least one other RAT.

When the determined transmission mode of transmitting the control plane uplink signaling of the UE is single-RAT diversity transmission, reconfiguring, by the wireless communication network system, the RRC connection of the UE according to the determined transmission mode of transmitting the control plane uplink signaling of the UE includes that:
when the wireless communication network system establishes the Al connection with the UE using only one RAT originally, the wireless communication network system keeps the Al connection; and
when the wireless communication network system establishes the AI connections with the UE using at least two RATs originally, the wireless communication network system keeps the AI connection which is established with the UE using one RAT originally, and deletes the AI connection which is established with the UE using the other RAT originally.

Herein, when the determined transmission mode of transmitting the control plane uplink signaling of the UE is the multi-RAT diversity transmission, and after the wireless communication network system indicates the transmission mode of transmitting the control plane uplink signaling to the UE, the method further includes that: the wireless communication network system receives, through the AI connections using at least two RATs, the same control plane uplink signaling sent by the UE; and the wireless communication network system performs soft combining or selective combining on the received control plane uplink signaling. The soft combining refers to merging signal data of multiple AIs for use, and the selective combining refers to selecting signal data of a certain Al with a better signal.

When the determined transmission mode of transmitting the control plane uplink signaling of the UE is the single-RAT transmission, and after the wireless communication network system indicates the transmission mode of transmitting the control plane uplink signaling to the UE, the method further includes that: the wireless communication network system receives, through the kept Al connection using the RAT, the control plane uplink signaling sent by the UE.

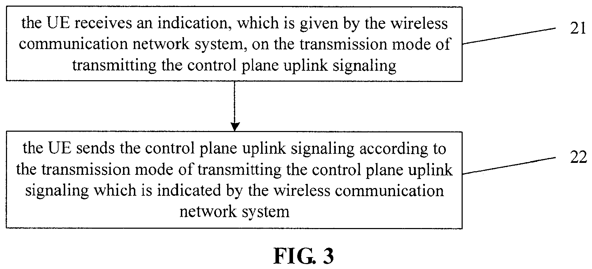

FIG. 3 is a flowchart of a method for transmitting control plane uplink signaling provided by an embodiment of the claimed invention.

As shown in FIG. 3, the method for transmitting control plane uplink signaling provided by the present embodiment includes the following steps.

In S21, the UE receives an indication, which is given by the wireless communication network system, on the transmission mode of transmitting the control plane uplink signaling, wherein the transmission mode of transmitting the control plane uplink signaling is determined by the wireless communication network system according to the multi-RAT diversity transmission determination information.

Herein, the multi-RAT diversity transmission determination information includes the multi-RAT control plane uplink signaling diversity capability information of the UE and any one or more of the following information:
the type information of the UE;
the type information of the user which initiates the service request through the UE;
the service type information of the user;
the measurement report information of the UE; and
the multi-RAT control plane uplink signaling diversity capability information of the wireless communication network.

Before S21, the method further includes that: the UE establishes the Al connection with the wireless communication network system using an RAT, and transmits the multi-RAT control plane uplink signaling diversity capability information of the UE and any one of more of the following information to the wireless communication network system through the Al connection:
the type information of the UE;
the type information of the user which initiates the service request through the UE;
the service type information of the user.

Moreover, after the wireless communication network system establishes the Al connection with the UE using a certain RAT, the wireless communication network system may require the UE to report the measurement report information.

In S22, the UE sends the control plane uplink signaling according to the transmission mode of transmitting the control plane uplink signaling which is indicated by the wireless communication network system.

Herein, S22 includes that:
when the transmission mode of transmitting the control plane uplink signaling which is indicated by the wireless communication network system is the multi-RAT diversity transmission, the UE sends the same control plane uplink signaling to the wireless communication network system through the Al connections which are established using at least two RATs; and
when the transmission mode of transmitting the control plane uplink signaling which is indicated by the wireless communication network system is the single-RAT diversity transmission, the UE sends the control plane uplink signaling to the wireless communication network system through the AI connection which is established using one RAT.

An example of the disclosure also provides a computer storage medium, in which a computer executable instruction is stored. The computer executable instruction is used for performing the above method.

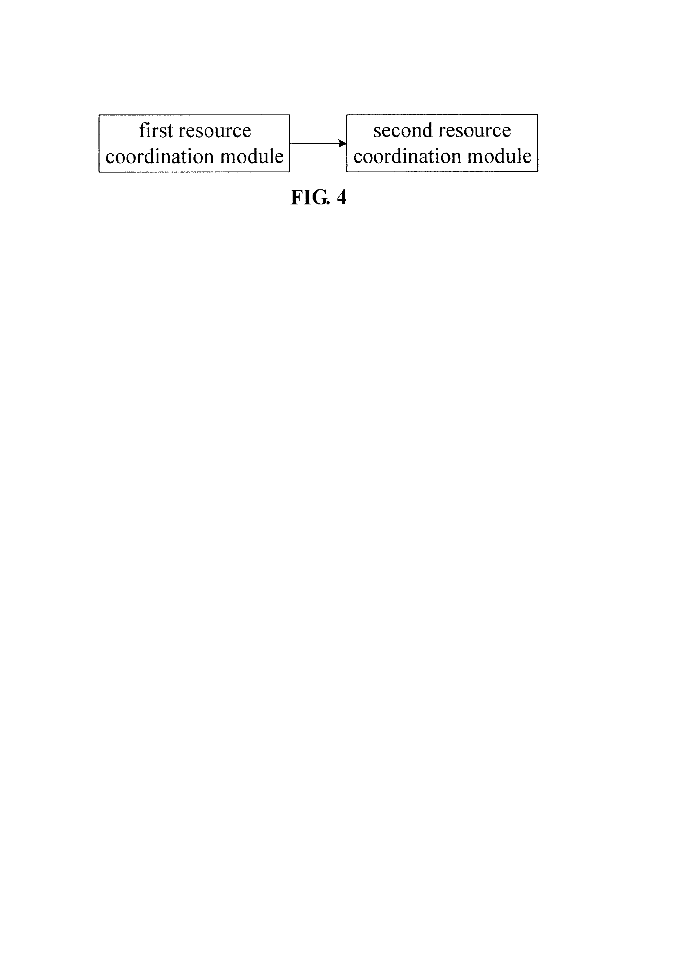

Moreover, an embodiment of the disclosure also provides a system for transmitting control plane uplink signaling, which is applied to the wireless communication network system. As shown in FIG. 4, the system includes: a first resource coordination module configured to determine, according to the multi-RAT diversity transmission determination information, the transmission mode of transmitting the control plane uplink signaling of the UE sending the service request; and a second resource coordination module configured to indicate the transmission mode of transmitting the control plane uplink signaling to the UE.

Herein, the multi-RAT diversity transmission determination information includes the multi-RAT control plane uplink signaling diversity capability information of the UE and any one or more of the following information:
the type information of the UE;
the type information of the user which initiates the service request through the UE;
the service type information of the user;
the measurement report information of the UE; and
the multi-RAT control plane uplink signaling diversity capability information of the wireless communication network.

Herein, the first resource coordination module is further configured to acquire the multi-RAT control plane uplink signaling diversity capability information of the UE and any one or more of the following information through the AI connection established with the UE using an RAT:
the type information of the UE;
the type information of the user which initiates the service request through the UE;
the service type information of the user.

Herein, the second resource coordination module is further configured to, when indicating the transmission mode of transmitting the control plane uplink signaling to the UE, reconfigure the RRC connection of the UE according to the determined transmission mode of transmitting the control plane uplink signaling of the UE.

In an embodiment, when the determined transmission mode of transmitting the control plane uplink signaling of the UE is the multi-RAT diversity transmission, the second resource coordination module is configured to reconfigure the RRC connection of the UE according to the determined transmission mode of transmitting the control plane uplink signaling of the UE by implementing the following process:
when the wireless communication network system establishes the Al connection with the UE using only one RAT originally, the wireless communication network system keeps the Al connection using the RAT, and establishes a new Al connection with the UE using at least one other RAT; and
when the wireless communication network system establishes the AI connections with the UE using at least two RATs originally, the wireless communication network system keeps the AI connection which is established with the UE using one RAT originally, deletes the AI connection which is established with the UE using the other RAT originally, and establishes a new Al connection with the UE using at least one other RAT.

In an embodiment, the system further includes: a control plane signaling processing module configured to, when the determined transmission mode of transmitting the control plane uplink signaling of the UE is the multi-RAT diversity transmission, and after the second resource coordination module indicates the transmission mode of transmitting the control plane uplink signaling to the UE, receive, through the AI connections using at least two RATs, the same control plane uplink signaling sent by the UE. Herein, the control plane signaling processing module is further configured to, after receiving, through the AI connections using at least two RATs, the same control plane uplink signaling sent by the UE, perform soft combining or selective combining on the received control plane uplink signaling.

In an embodiment, when the determined transmission mode of transmitting the control plane uplink signaling of the UE is the single-RAT transmission, the second resource coordination module is configured to reconfigure the RRC connection of the UE according to the determined transmission mode of transmitting the control plane uplink signaling of the UE by implementing the following process:
when the wireless communication network system establishes the Al connection with the UE using only one RAT originally, the wireless communication network system keeps the Al connection; and
when the wireless communication network system establishes the AI connections with the UE using at least two RATs originally, the wireless communication network system keeps the AI connection which is established with the UE using one RAT originally, and deletes the AI connection which is established with the UE using the other RAT originally.

In an embodiment, the system further includes: a control plane signaling processing module configured to, when the determined transmission mode of transmitting the control plane uplink signaling of the UE is the single-RAT transmission, and after the second resource coordination module indicates the transmission mode of transmitting the control plane uplink signaling to the UE, receive, through the kept Al connection using the RAT, the control plane uplink signaling sent by the UE.

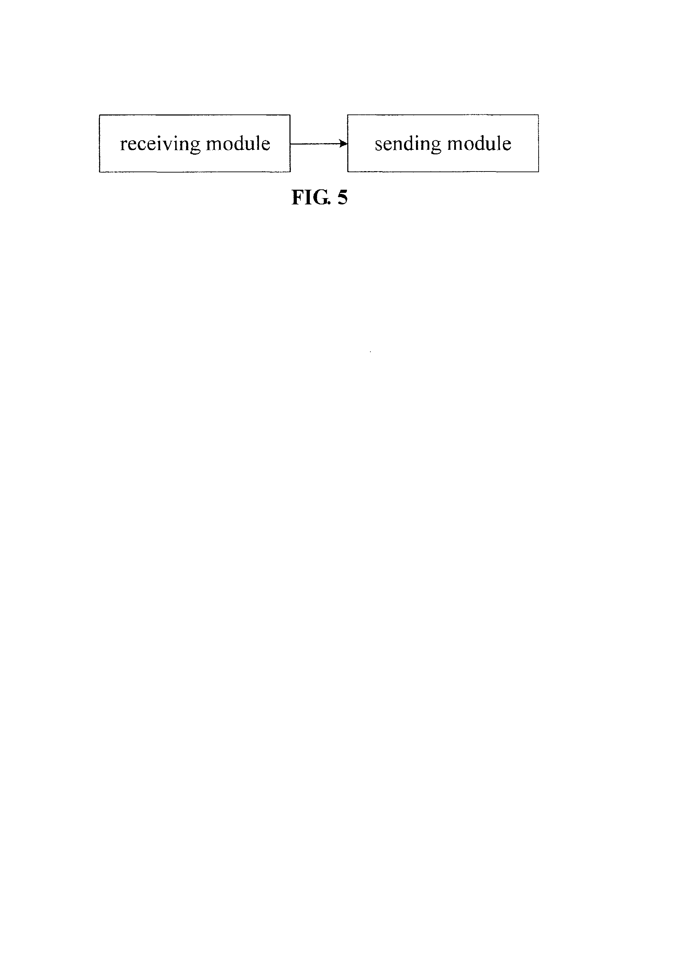

Moreover, an embodiment of the disclosure also provides a system for transmitting control plane uplink signaling, which is applied to the UE. As shown in FIG. 5, the system includes: a receiving module configured to receive the indication, which is given by the wireless communication network system, on the transmission mode of transmitting the control plane uplink signaling, wherein the transmission mode of transmitting the control plane uplink signaling is determined by the wireless communication network system according to the multi-RAT diversity transmission determination information; and a sending module configured to send the control plane uplink signaling according to the transmission mode of transmitting the control plane uplink signaling which is indicated by the wireless communication network system. In practical applications, the receiving module is a communication component with an information receiving function, and the sending module is a communication component with an information sending function.

Herein, the multi-RAT diversity transmission determination information includes the multi-RAT control plane uplink signaling diversity capability information of the UE and any one or more of the following information:
the type information of the UE;
the type information of the user which initiates the service request through the UE;
the service type information of the user;
the measurement report information of the UE; and
the multi-RAT control plane uplink signaling diversity capability information of the wireless communication network.

Herein, the system further includes: a connection module configured to establish the Al connection with the wireless communication network system using an RAT.

Herein, the sending module is configured to,
when the transmission mode of transmitting the control plane uplink signaling which is indicated by the wireless communication network system is the multi-RAT diversity transmission, send the same control plane uplink signaling to the wireless communication network system through the Al connections which are established using at least two RATs, and
when the transmission mode of transmitting the control plane uplink signaling which is indicated by the wireless communication network system is the single-RAT diversity transmission, send the control plane uplink signaling to the wireless communication network system through the AI connection which is established using one RAT.

Moreover, the specific processing flow of the system is the same as that of the method, so it will not be repeated here.

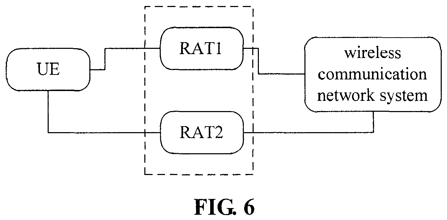

FIG. 6 is an application diagram of an embodiment of the disclosure. As shown in FIG. 6, for example, the wireless communication network system establishes the Al connection with the UE using RAT1; the wireless communication network system acquires the multi-RAT control plane uplink signaling diversity capability information of the UE and any one or more of the type information of the UE, the type information of the user, the service type information of the user; the UE initiates a service request; when the wireless communication network system determines, according to the multi-RAT diversity transmission determination information, that the multi-RAT diversity transmission (namely the same control plane uplink signaling is transmitted through different RATs) is adopted for the control plane uplink signaling, the wireless communication network system reconfigures the RRC connection of the UE through the Al connection using the RAT1, and indicates that the multi-RAT diversity transmission is adopted for the control plane uplink signaling. Specifically, if the wireless communication network system establishes the Al connection with the UE only using the RAT1 currently, the wireless communication network system keeps the Al connection using the RAT1, and establishes a new Al connection using RAT2; or, if the wireless communication network system establishes the Al connection with the UE using the RAT1 and the RAT2, the wireless communication network system may keep the Al connection using the RAT1, delete the Al connection using the RAT2, and establish a new Al connection using RAT3. However, the disclosure does not limit it, and in practical applications, it depends on the actual situations of RAT. For example, the UE transmits the same control plane uplink signaling through the Al connection using the RAT1 and the Al connection using the RAT2, or transmits the same control plane uplink signaling through the Al connection using the RAT1 and the Al connection using the RAT3; after receiving the same control plane uplink signaling which is sent through the Al connections using different RATs, the wireless communication network system performs soft combining or selective combining on the received control plane uplink signaling.

When the wireless communication network system determines, according to the multi-RAT diversity transmission determination information, that the single-RAT diversity transmission is adopted for the control plane uplink signaling, if the current transmission mode of transmitting the control plane uplink signaling is the multi-RAT diversity transmission (for example, the control plane uplink signaling is transmitted through the AI connections using the RAT1 and the RAT2), the wireless communication network system reconfigures the RRC connection of the UE (for example, the wireless communication network system keeps the Al connection using the RAT1 and deletes the Al connection using the RAT2), and indicates that the single-RAT transmission is adopted for the control plane uplink signaling; and the UE transmits the control plane uplink signaling to the wireless communication network system through the Al connection using the RAT1; if the current transmission mode of transmitting the control plane uplink signaling is the single-RAT diversity transmission (for example, the control plane uplink signaling is transmitted through the Al connection using the RAT1), there is no need to perform any operation, and the UE sends the control plane uplink signaling to the wireless communication network system through the Al connection using the RAT1. After receiving the control plane uplink signaling which is sent through the Al connection using the RAT1, the wireless communication network system can process it without need of diversity gain.

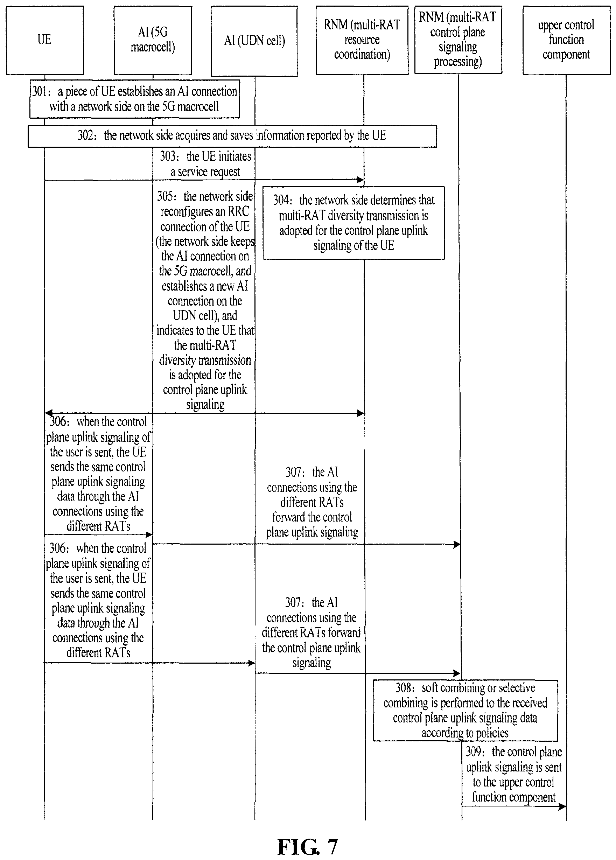

FIG. 7 is a flowchart of a method for transmitting control plane uplink signaling provided by an example 1 of the disclosure. In the present example, an industrially controlled U-MTC in a factory is taken as a scenario, a 5G network is deployed with accesses of a 5G macrocell, a UDN cell and other different RATs, and it is needed to meet requirements of wireless communication for ultra-reliability and ultralow delay.

In the present example, RNM for multi-RAT resource coordination is used for receiving a service request of the UE and determining the transmission mode of transmitting the control plane uplink signaling of the UE; and RNM for multi-RAT control plane signaling processing is used for transmitting the received control plane uplink signaling to an upper control function component. Herein, all of the RNM for multi-RAT resource coordination, the RNM for multi-RAT control plane signaling processing and the upper control function component are function components, and can be deployed in different logical entities according to scenarios. For example, in a tight coupling mode, the RNM for multi-RAT resource coordination and the RNM for multi-RAT control plane signaling processing can be deployed in the 5G macrocell; in a loose coupling mode, the RNM for multi-RAT resource coordination and the RNM for multi-RAT control plane signaling processing can be deployed in an independent local gateway.

As shown in FIG. 7, the present example is described in detail below.

In S301, a piece of UE establishes an Al connection with a network side on the 5G macrocell, and transmits information to the network side, wherein the information includes: type information of the UE (for example, the type of a piece of industrially controlled UE) and multi-RAT control plane uplink signaling diversity capability information of the UE (for example, the UE supports multi-RAT control plane uplink signaling diversity transmission of the 5G macrocell and the UDN cell).

In S302, the network side acquires and saves information reported by the UE.

In S303, the UE initiates a service request.

In S304, after receiving the service request of a user, the network side determines, according to the type information of the UE (for example, the type of the industrially controlled UE), the multi-RAT control plane uplink signaling diversity capability information of the UE (for example, the UE supports the multi-RAT control plane uplink signaling diversity transmission of the 5G macrocell and the UDN cell), and multi-RAT control plane uplink signaling diversity capability information of a wireless communication network (for example, the 5G macrocell and the UDN cell cover an area where the UE is, and the network supports the multi-RAT control plane uplink signaling diversity transmission of the 5G macrocell and the UDN cell), that multi-RAT diversity transmission (namely the same control plane uplink signaling is transmitted through different RATs) is adopted for the control plane uplink signaling of the user, so as to improve reliability and reduce delay.

In S305, the network side reconfigures an RRC connection of the UE (for example, the network side keeps the Al connection on the 5G macrocell, and establishes a new Al connection on the UDN cell), and indicates to the UE that the multi-RAT diversity transmission (namely the same control plane uplink signaling is transmitted through the Al connection on the 5G macrocell and the Al connection on the UDN cell) is adopted for the control plane uplink signaling.

In S306, when sending control plane uplink signaling data to the network side, the UE sends the same control plane uplink signaling data through the AI connections using the different RATs.

In S307, after receiving the control plane uplink signaling, the AI connections using the different RATs forward it to the RNM for multi-RAT control plane signaling processing.

In S308, the RNM for multi-RAT control plane signaling processing performs, according to policies, soft combining or selective combining on the control plane uplink signaling data sent by the AI connections using the different RATs.

In S309, the RNM for multi-RAT control plane signaling processing sends the control plane uplink signaling to the upper control function component.

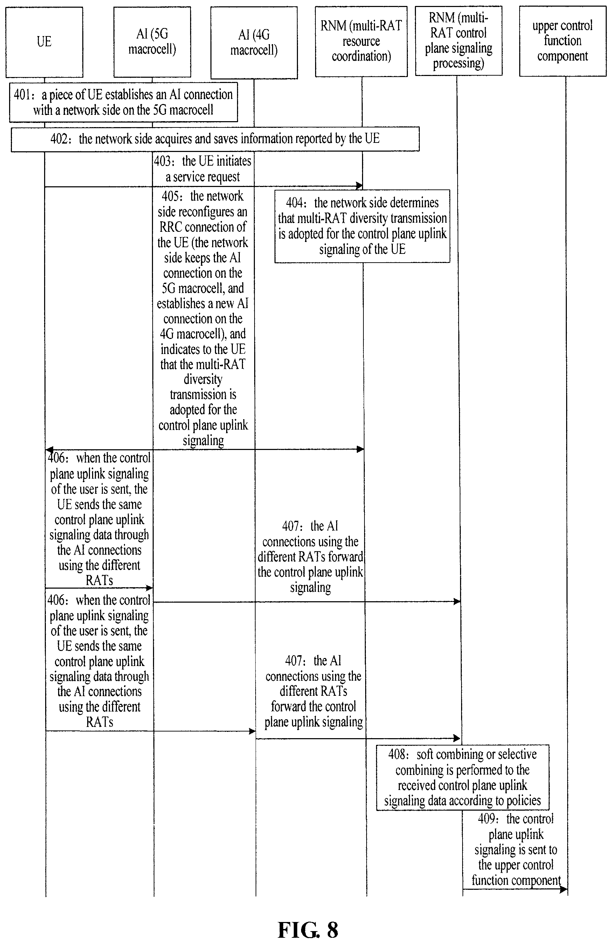

FIG. 8 is a flowchart of a method for transmitting control plane uplink signaling provided by an example 2 of the disclosure. In the present example, a U-MTC controlled by a smart grid is taken as a scenario, a network is deployed with accesses of a 5G macrocell, a 4G macrocell and other different RATs. A 4G network provides basic coverage, a 5G network provides a hotspot enhanced coverage, and it is needed to meet requirements of wireless communication for ultra-reliability and ultralow delay.

In the present example, the RNM for multi-RAT resource coordination is used for receiving the service request of the UE and determining the transmission mode of transmitting the control plane uplink signaling of the UE; and the RNM for multi-RAT control plane signaling processing is used for transmitting the received control plane uplink signaling to the upper control function component. Herein, all of the RNM for multi-RAT resource coordination, the RNM for multi-RAT control plane signaling processing and the upper control function component are function components, and can be deployed in different logical entities according to scenarios. For example, in the tight coupling mode, the RNM for multi-RAT resource coordination and the RNM for multi-RAT control plane signaling processing can be deployed in the 5G macrocell; in the loose coupling mode, the RNM for multi-RAT resource coordination and the RNM for multi-RAT control plane signaling processing can be deployed in the independent local gateway.

As shown in FIG. 8, the present example is described in detail below.

In S401, a piece of UE establishes an Al connection with a network side on the 5G macrocell, and transmits information to the network side, wherein the information includes: type information of the UE (for example, the type of a piece of UE controlled by the smart grid) and multi-RAT control plane uplink signaling diversity capability information of the UE (for example, the UE supports the multi-RAT control plane uplink signaling diversity transmission of the 5G macrocell and the 4G macrocell).

In S402, the network side acquires and saves information reported by the UE.

In S403, the UE initiates a service request.

In S404, after receiving the service request of a user, the network side determines, according to the type information of the UE (for example, the type of the UE controlled by the smart grid), the multi-RAT control plane uplink signaling diversity capability information of the UE (for example, the UE supports the multi-RAT control plane uplink signaling diversity transmission of the 5G macrocell and the 4G macrocell), and multi-RAT control plane uplink signaling diversity capability information of the wireless communication network (for example, the 5G macrocell and the 4G macrocell cover an area where the UE is, and the network supports the multi-RAT control plane uplink signaling diversity transmission of the 5G macrocell and the 4G macrocell), that multi-RAT diversity transmission (namely the same control plane uplink signaling is transmitted through different RATs) is adopted for the control plane uplink signaling of the user, so as to improve reliability and reduce delay.

In S405, the network side reconfigures an RRC connection of the UE (for example, the network side keeps the Al connection on the 5G macrocell, and establishes a new Al connection on the 4G macrocell), and indicates to the UE that the multi-RAT diversity transmission (namely the same control plane uplink signaling is transmitted through the Al connection on the 5G macrocell and the Al connection on the 4G macrocell) is adopted for the control plane uplink signaling.

In S406, when sending control plane uplink signaling data to the network side, the UE sends the same control plane uplink signaling data through the Al connections using the different RATs.

In S407, after receiving the control plane uplink signaling, the AI connections using the different RATs forward it to the RNM for multi-RAT control plane signaling processing.

In S408, the RNM for multi-RAT control plane signaling processing performs, according to policies, soft combining or selective combining on the control plane uplink signaling data sent by the AI connections using the different RATs.

In S409, the RNM for multi-RAT control plane signaling processing sends the control plane uplink signaling to the upper control function component.

Those ordinary skill in the art may understand that all or part of the steps in the method can be performed by related hardware instructed through a program. The program may be stored in computer readable storage media, such as a read-only memory, a magnetic disk or a compact disk. Alternatively, all or part of the steps of the embodiments may also be implemented by using one or multiple integrated circuits. Correspondingly, each module/unit in the embodiments may be implemented in the form of hardware, for example, its corresponding function is implemented through an integrated circuit, or in the form of software function module, for example, its corresponding function is implemented by executing programs/instructions stored in a memory through a processor. The disclosure is not limited to any particular combination of hardware and software.

The above shows and describes basic principles, main characteristics and advantages of the disclosure.

### INDUSTRIAL APPLICABILITY

During multi-RAT hybrid networking, the above technical solutions can perform URC transmission to control plane uplink signaling of a user aiming at a URC requirement of the user, thereby implementing URC of the control plane uplink signaling during the multi-RAT hybrid networking.

## Claims

1. A method for controlling transmitting control plane uplink signaling, comprising:
determining (11), by a wireless communication network system according to multi-Radio Access Technology, RAT, diversity transmission determination information, a transmission mode of transmitting the control plane uplink signaling of a User Equipment, UE, sending a service request; and
indicating (12), by the wireless communication network system, the transmission mode of transmitting the control plane uplink signaling to the UE;
wherein the multi-RAT diversity transmission determination information comprises multi-RAT control plane uplink signaling diversity capability information of the UE and any one or more of the following information:
type information of the UE;
type information of a user which initiates the service request through the UE;
service type information of the user;
measurement report information of the UE; and
multi-RAT control plane uplink signaling diversity capability information of a wireless communication network; and
wherein before the wireless communication network system determines, according to the multi-RAT diversity transmission determination information, the transmission mode of transmitting the control plane uplink signaling of the UE sending the service request,
establishing, by the wireless communication network system, an Air Interface, Al, connection with the UE using an RAT, and acquiring the multi-RAT control plane uplink signaling diversity capability information of the UE and any one or more of the following information through the Al connection:
the type information of the UE;
the type information of the user which initiates the service request through the UE; and
the service type information of the user;
wherein when indicating the transmission mode of transmitting the control plane uplink signaling to the UE, reconfiguring, by the wireless communication network system, a Radio Resource Control, RRC, connection of the UE according to the determined transmission mode of transmitting the control plane uplink signaling of the UE;
wherein when the determined transmission mode of transmitting the control plane uplink signaling of the UE is multi-RAT diversity transmission, reconfiguring, by the wireless communication network system, the RRC connection of the UE according to the determined transmission mode of transmitting the control plane uplink signaling of the UE comprises:
when the wireless communication network system establishes an Air Interface, Al, connection with the UE using only one RAT originally, keeping, by the wireless communication network system, the Al connection using the RAT, and establishing a new AI connection with the UE using at least one other RAT;
when the wireless communication network system establishes AI connections with the UE using at least two RATs originally, keeping, by the wireless communication network system, an Al connection which is established with the UE using one of the at least two RATs originally, deleting an Al connection which is established with the UE using another RAT of the at least two RATs originally, and establishing a new AI connection with the UE using at least one other RAT; wherein the multi-RAT diversity transmission means that the same control plane uplink signaling is transmitted by the UE through different RATs.

2. The method according to claim 1, further comprising:
when the determined transmission mode of transmitting the control plane uplink signaling of the UE is the multi-RAT diversity transmission, and after the wireless communication network system indicates the transmission mode of transmitting the control plane uplink signaling to the UE, receiving, by the wireless communication network system through the Al connections using at least two RATs, the same control plane uplink signaling sent by the UE; and
after the wireless communication network system receives, through the Al connections using the at least two RATs, the same control plane uplink signaling sent by the UE, performing, by the wireless communication network system, soft combining or selective combining on the received control plane uplink signaling.

3. The method according to claim 1, wherein when the determined transmission mode of transmitting the control plane uplink signaling of the UE is single-RAT transmission, reconfiguring, by the wireless communication network system, the RRC connection of the UE according to the determined transmission mode of transmitting the control plane uplink signaling of the UE comprises:
when the wireless communication network system establishes an Air Interface, Al, connection with the UE using only one RAT originally, keeping, by the wireless communication network system, the Al connection;
when the wireless communication network system establishes AI connections with the UE using at least two RATs originally, keeping, by the wireless communication network system, an Al connection which is established with the UE using one of the at least two RATs originally, and deleting Al connections which are established with the UE using other RATs of the at least two RATs originally,
wherein the method further comprises:
when the determined transmission mode of transmitting the control plane uplink signaling of the UE is the single-RAT transmission, and after the wireless communication network system indicates the transmission mode of transmitting the control plane uplink signaling to the UE, receiving, by the wireless communication network system through the kept Al connection using one RAT, the control plane uplink signaling sent by the UE.

4. A method for transmitting control plane uplink signaling, comprising:
receiving (21), by a User Equipment, UE, an indication, which is given by a wireless communication network system, on a transmission mode of transmitting the control plane uplink signaling; and
sending (22), by the UE, the control plane uplink signaling according to the transmission mode of transmitting the control plane uplink signaling which is indicated by the wireless communication network system;
the method further comprising:
before the UE receives the indication, which is given by the wireless communication network system, on the transmission mode of transmitting the control plane uplink signaling, establishing, by the UE, an Air Interface, Al, connection with the wireless communication network system using an Radio Access Technology, RAT, and transmitting multi-RAT control plane uplink signaling diversity capability information of the UE and any one or more of the following information to the wireless communication network system through the Al connection:
type information of the UE;
type information of a user which initiates a service request through the UE; and
service type information of the user;
wherein the transmission mode is determined by the wireless communication network system according to multi-Radio Access Technology, RAT, diversity transmission determination information, the multi-RAT diversity transmission determination information comprising the multi-RAT control plane uplink signaling diversity capability information of the UE and any one or more of the following information:
the type information of the UE;
the type information of the user which initiates the service request through the UE;
the service type information of the user;
measurement report information of the UE; and
multi-RAT control plane uplink signaling diversity capability information of a wireless communication network;
wherein sending, by the UE, the control plane uplink signaling according to the transmission mode of transmitting the control plane uplink signaling which is indicated by the wireless communication network system comprises:
when the transmission mode of transmitting the control plane uplink signaling which is indicated by the wireless communication network system is multi-RAT diversity transmission, sending, by the UE, the same control plane uplink signaling to the wireless communication network system through the Al connections which are established using at least two RATs, wherein one of the Al connections which are established using the at least two RATs is a new Al connection established with the UE using at least one other RAT; and
wherein when the UE is establishing an Air Interface, Al, connection with the wireless communication network system using only one RAT originally, the Al connection using the RAT is kept, and the new Al connection is established using the at least one other RAT,
when the UE is establishing the Al connections with the wireless communication network system using at least two RATs originally, an Al connection which is established using one of the at least two RATs originally is kept, an Al connection which is established using another RAT of the at least two RATs originally is deleted, by the wireless communication network system, and the new Al connection is established using the at least one other RAT,
when the transmission mode of transmitting the control plane uplink signaling which is indicated by the wireless communication network system is single-RAT diversity transmission, sending, by the UE, the control plane uplink signaling to the wireless communication network system through the Al connection which is established using one RAT.

5. A device for controlling transmitting control plane uplink signaling, which is applied to a wireless communication network system, comprising:
a first resource coordination module configured to determine, according to multi-Radio Access Technology, RAT, diversity transmission determination information, a transmission mode of transmitting the control plane uplink signaling of a User Equipment, UE, sending a service request; and
a second resource coordination module configured to indicate the transmission mode of transmitting the control plane uplink signaling to the UE;
wherein the multi-RAT diversity transmission determination information comprises multi-RAT control plane uplink signaling diversity capability information of the UE and any one or more of the following information:
type information of the UE;
type information of the user which initiates the service request through the UE;
service type information of the user;
measurement report information of the UE; and
multi-RAT control plane uplink signaling diversity capability information of a wireless communication network; and
wherein the first resource coordination module is further configured to acquire the multi-RAT control plane uplink signaling diversity capability information of the UE and any one or more of the following information through an Air Interface, Al, connection established with the UE using an RAT:
the type information of the UE;
the type information of the user which initiates the service request through the UE; and
the service type information of the user;
wherein the second resource coordination module is further configured to, when indicating the transmission mode of transmitting the control plane uplink signaling to the UE, reconfigure a Radio Resource Control, RRC, connection of the UE according to the determined transmission mode of transmitting the control plane uplink signaling of the UE;
wherein when the determined transmission mode of transmitting the control plane uplink signaling of the UE is multi-RAT diversity transmission, the second resource coordination module is configured to reconfigure the RRC connection of the UE according to the determined transmission mode of transmitting the control plane uplink signaling of the UE by implementing the following process:
when the wireless communication network system establishes an Air Interface, Al, connection with the UE using only one RAT originally, the wireless communication network system keeps the Al connection using the RAT, and establishes a new Al connection with the UE using at least one other RAT; and
when the wireless communication network system establishes Al connections with the UE using at least two RATs originally, the wireless communication network system keeps an Al connection which is established with the UE using one of the at least two RATs originally, deletes an Al connection which is established with the UE using another RAT of the at least two RATs originally, and establishes a new Al connection with the UE using at least one other RAT; wherein the multi-RAT diversity transmission means that the same control plane uplink signaling is transmitted by the UE through different RATs.

6. The device according to claim 5, further comprising:
a control plane signaling processing module configured to, when the determined transmission mode of transmitting the control plane uplink signaling of the UE is the multi-RAT diversity transmission, and after the second resource coordination module indicates the transmission mode of transmitting the control plane uplink signaling to the UE, receive, through the Al connections using at least two RATs, the same control plane uplink signaling sent by the UE,
wherein the control plane signaling processing module is further configured to, after receiving, through the Al connections using the at least two RATs, the same control plane uplink signaling sent by the UE, perform soft combining or selective combining on the received control plane uplink signaling.

7. A device for transmitting control plane uplink signaling, which is applied to a User Equipment, UE, the device comprising:
a receiving module configured to receive an indication, which is given by a wireless communication network system, on a transmission mode of transmitting the control plane uplink signaling;
a sending module configured to send the control plane uplink signaling according to the transmission mode of transmitting the control plane uplink signaling which is indicated by the wireless communication network system; and
a connection module configured to establish an Air Interface, Al, connection with the wireless communication network system using a Radio Access Technology, RAT;
wherein the sending module is further configured to send multi-RAT control plane uplink signaling diversity capability information of the UE and any one or more of the following information through the Al connection established with the wireless communication network system using the RAT:
type information of the UE;
type information of a user which initiates a service request through the UE; and
service type information of the user;
wherein the wireless communication network system determines the transmission mode according to multi-Radio Access Technology, RAT, diversity transmission determination information, the multi-RAT diversity transmission determination information comprising the multi-RAT control plane uplink signaling diversity capability information of the UE and any one or more of the following information:
the type information of the UE;
the type information of the user which initiates the service request through the UE;
the service type information of the user;
measurement report information of the UE; and
multi-RAT control plane uplink signaling diversity capability information of a wireless communication network;
wherein the sending module is further configured to,
when the transmission mode of transmitting the control plane uplink signaling which is indicated by the wireless communication network system is multi-RAT diversity transmission, send the same control plane uplink signaling to the wireless communication network system through the Al connections which are established using at least two RATs,
wherein one of the Al connections which are established using the at least two RATs is a new Al connection established with the UE using at least one other RAT,
wherein when the UE is establishing an Air Interface, Al, connection with the wireless communication network system using only one RAT originally, the Al connection using the RAT is kept, and the new Al connection is established using the at least one other RAT,
when the UE is establishing the Al connections with the wireless communication network system using at least two RATs originally, an Al connection which is established using one of the at least two RATs originally is kept, an Al connection which is established using another RAT of the at least two RATs originally is deleted, by the wireless communication network system, and the new Al connection is established using the at least one other RAT, and
when the transmission mode of transmitting the control plane uplink signaling which is indicated by the wireless communication network system is single-RAT diversity transmission, send the control plane uplink signaling to the wireless communication network system through the Al connection which is established using one RAT.

## Patentansprüche

1. Verfahren zur Steuerung der Übertragung von Steuerebenen-Aufwärtssignalisierung, welches umfasst:
ein Bestimmen (11) durch ein Netzwerksystem drahtloser Kommunikation gemäß Diversitätssendebestimmungsinformationen für ein Mehrfachfunkzugriffsverfahren, Multi-RAT, eines Sendemodus des Sendens der Steuerebenen-Aufwärtssignalisierung eines Benutzergeräts, UE, das eine Dienstanforderung sendet, und
ein Anzeigen (12) durch das Netzwerksystem drahtloser Kommunikation des Übertragungsmodus des Übertragens der Steuerebenen-Aufwärtssignalisierung an das UE,
wobei die Diversitätssendebestimmungsinformationen für das Multi-RAT Diversitätsfähigkeitsinformationen für eine Multi-RAT-Steuerebenen-Aufwärtssignalisierung des UE und eine oder mehrere der folgenden Informationen umfasst:
Typinformationen des UE,
Typinformationen eines Benutzers, der die Dienstanforderung durch das UE initiiert,
Diensttypinformationen des Benutzers,
Messberichtsinformationen des UE, und
Diversitätsfähigkeitsinformationen für die Multi-RAT-Steuerebenen-Aufwärtssignalisierung eines Netzwerksystems drahtloser Kommunikation, und
wobei, bevor das Netzwerksystem drahtloser Kommunikation gemäß der Diversitätssendebestimmungsinformationen für das Multi-RAT den Sendemodus des Sendens der Steuerebenen-Aufwärtssignalisierung des die Dienstanforderung sendenden UE bestimmt,
ein Einrichten einer Luftschnittstellenverbindung, Air-Interface-Verbindung, Al-Verbindung, mit dem UE mittels eines RAT durch das Netzwerksystem drahtloser Kommunikation und ein Erfassen der Diversitätsfähigkeitsinformationen für die Multi-RAT-Steuerebenen-Aufwärtssignalisierung des UE und einer oder mehrerer der folgenden Informationen über die Al-Verbindung:
die Typinformationen des UE,
die Typinformationen des Benutzers, der die Dienstanforderung durch das UE initiiert, und
die Diensttypinformationen des Benutzers,
wobei, wenn der Übertragungsmodus des Übertragens der Steuerebenen-Aufwärtssignalisierung an das UE angezeigt wird, ein Rekonfigurieren einer RRC-Verbindung (Radio Resource Control Verbindung) des UE durch das Netzwerksystem drahtloser Kommunikation gemäß dem bestimmten Übertragungsmodus des Übertragens der Steuerebenen-Aufwärtssignalisierung des UE,
wobei, wenn der bestimmte Übertragungsmodus des Übertragens der Steuerebenen-Aufwärtssignalisierung des UE eine Multi-RAT-Diversitätsübertragung ist, ein Rekonfigurieren der RRC-Verbindung des UE durch das Netzwerksystem drahtloser Kommunikation gemäß dem bestimmten Übertragungsmodus des Übertragens der Steuerebenen-Aufwärtssignalisierung des UE umfasst:
wenn das Netzwerksystem drahtloser Kommunikation eine Luftschnittstellenverbindung, Air-Interface-Verbindung, Al-Verbindung, mit dem UE unter Verwendung von ursprünglich nur einem RAT herstellt, ein Beibehalten der Al-Verbindung unter Verwendung des RAT durch das Netzwerksystem drahtloser Kommunikation und ein Herstellen einer neuen Al-Verbindung mit dem UE unter Verwendung mindestens eines anderen RAT,
wenn das Netzwerksystem drahtloser Kommunikation AI-Verbindungen mit dem UE unter Verwendung von ursprünglich mindestens zwei RATs aufbaut, ein Aufrechterhalten einer Al-Verbindung, die mit dem UE unter Verwendung eines der mindestens zwei RATs aufgebaut worden ist, durch das Netzwerksystem drahtloser Kommunikation, ein Löschen einer Al-Verbindung, die mit dem UE unter Verwendung eines anderen RATs der mindestens zwei RATs aufgebaut worden ist, und ein Aufbauen einer neuen Al-Verbindung mit dem UE unter Verwendung mindestens eines anderen RATs, wobei die Multi-RAT-Diversitätsübertragung bedeutet, dass dieselbe Steuerebenen-Aufwärtssignalisierung von dem UE über verschiedene RATs übertragen wird.

2. Verfahren nach Anspruch 1, welches ferner umfasst:
wenn der bestimmte Übertragungsmodus des Übertragens der Steuerebenen-Aufwärtssignalisierung des UE die Multi-RAT-Diversitätsübertragung ist, und nachdem das Netzwerksystem drahtloser Kommunikation den Übertragungsmodus des Übertragens der Steuerebenen-Aufwärtssignalisierung an das UE anzeigt, ein Empfangen der gleichen Steuerebenen-Aufwärtssignalisierung, die von dem UE gesendet worden ist, durch das Netzwerksystem drahtloser Kommunikation über die Al-Verbindungen unter Verwendung von mindestens zwei RATs, und
nachdem das Netzwerksystem drahtloser Kommunikation über die Al-Verbindungen unter Verwendung der mindestens zwei RATs die gleiche Steuerebenen-Aufwärtssignalisierung, die von dem UE gesendet worden ist, empfängt, ein Durchführen eines weichen Kombinierens oder eines selektiven Kombinierens an der empfangenen Steuerebenen-Aufwärtssignalisierung durch das Netzwerksystem drahtloser Kommunikation.

3. Verfahren nach Anspruch 1, wobei, wenn der bestimmte Übertragungsmodus des Übertragens der Steuerebenen-Aufwärtssignalisierung des UE eine Einzel-RAT-Übertragung ist, ein Rekonfigurieren der RRC-Verbindung des UE durch das Netzwerksystem drahtloser Kommunikation gemäß dem bestimmten Übertragungsmodus des Übertragens der Steuerebenen-Aufwärtssignalisierung des UE umfasst:
wenn das Netzwerksystem drahtloser Kommunikation eine Luftschnittstellenverbindung, Air-Interface-Verbindung, Al-Verbindung, mit dem UE unter Verwendung nur eines ursprünglichen RAT herstellt, ein Aufrechterhalten der Al-Verbindung durch das Netzwerksystem drahtloser Kommunikation,
wenn das Netzwerksystem drahtloser Kommunikation AI-Verbindungen mit dem UE unter Verwendung von ursprünglich mindestens zwei RATs herstellt, ein Beibehalten einer Al-Verbindung durch das Netzwerksystem drahtloser Kommunikation, die mit dem UE unter Verwendung eines der mindestens zwei RATs ursprünglich hergestellt wird, und ein Löschen von Al-Verbindungen, die mit dem UE unter Verwendung anderer RATs der mindestens zwei RATs ursprünglich hergestellt worden sind,
wobei das Verfahren ferner umfasst:
wenn der bestimmte Übertragungsmodus des Übertragens der Steuerebenen-Aufwärtssignalisierung des UE die Einzel-RAT-Übertragung ist, und nachdem das Netzwerksystem drahtloser Kommunikation den Übertragungsmodus des Übertragens der Steuerebenen-Aufwärtssignalisierung an das UE anzeigt, ein Empfangen der von dem UE gesendeten Steuerebenen-Aufwärtssignalisierung durch das Netzwerksystem drahtloser Kommunikation über die gehaltene Al-Verbindung unter Verwendung eines RAT.

4. Verfahren zum Übertragen einer Steuerebenen-Aufwärtssignalisierung, welches umfasst:
ein Empfangen (21), durch ein Benutzergerät, UE, einer Anzeige, die durch ein Netzwerksystem drahtloser Kommunikation gegeben wird, über einen Übertragungsmodus des Übertragens der Steuerebenen-Aufwärtssignalisierung, und
ein Senden (22) der Steuerebenen-Aufwärtssignalisierung durch das UE gemäß dem Übertragungsmodus der Übertragung der Steuerebenen-Aufwärtssignalisierung, der durch das Netzwerksystem drahtloser Kommunikation angegeben wird,
wobei das Verfahren ferner umfasst:
bevor das UE die durch das Netzwerksystem drahtloser Kommunikation gegebene Anzeige über den Übertragungsmodus der Übertragung der Steuerebenen-Aufwärtssignalisierung empfängt, ein Aufbauen einer Luftschnittstellenverbindung, Air-Interface-Verbindung, Al-Verbindung, mit dem Netzwerksystem drahtloser Kommunikation unter Verwendung einer Funkzugangstechnologie, Radio Access Technology, RAT, durch das UE und ein Übertragen von Diversitätsfähigkeitsinformationen für die Multi-RAT-Steuerebenen-Aufwärtssignalisierung des UE und einer oder mehrerer der folgenden Informationen an das Netzwerksystem drahtloser Kommunikation über die Al-Verbindung:
Typinformationen des UE,
Typinformationen eines Benutzers, der eine Dienstanforderung über das UE initiiert, und
Diensttypinformationen des Benutzers,
wobei der Übertragungsmodus durch das Netzwerksystem drahtloser Kommunikation gemäß Diversitätssendebestimmungsinformationen für das Multi-RAT bestimmt wird, wobei die Diversitätssendebestimmungsinformationen für das Multi-RAT die Diversitätsfähigkeitsinformationen für die Multi-RAT-Steuerebenen-Aufwärtssignalisierung des UE und eine oder mehrere der folgenden Informationen umfassen:
die Typinformationen des UE,
die Typinformationen des Benutzers, der die Dienstanforderung durch das UE initiiert,
die Diensttypinformationen des Benutzers,
Messberichtsinformationen des UE, und
Diversitätsfähigkeitsinformationen für die Multi-RAT-Steuerebenen-Aufwärtssignalisierung eines Netzwerksystems drahtloser Kommunikation,
wobei das Senden der Steuerebenen-Aufwärtssignalisierung durch das UE gemäß dem Übertragungsmodus des Übertragens der Steuerebenen-Aufwärtssignalisierung, der durch das Netzwerksystem drahtloser Kommunikation angezeigt wird, umfasst:
wenn der Übertragungsmodus des Übertragens der Steuerebenen-Aufwärtsstreckensignalisierung, der durch das Netzwerksystem drahtloser Kommunikation angezeigt wird, eine Multi-RAT-Diversitätsübertragung ist, ein Senden derselben Steuerebenen-Aufwärtsstreckensignalisierung an das Netzwerksystem drahtloser Kommunikation durch das UE über die Al-Verbindungen, die unter Verwendung von mindestens zwei RATs aufgebaut werden, wobei eine der Al-Verbindungen, die unter Verwendung der mindestens zwei RATs aufgebaut werden, eine neue Al-Verbindung ist, die mit dem UE unter Verwendung mindestens eines anderen RAT aufgebaut wird, und
wobei, wenn das UE eine Luftschnittstellenverbindung, Air-Interface-Verbindung, Al-Verbindung, mit dem Netzwerksystem drahtloser Kommunikation unter Verwendung von ursprünglich nur einem RAT aufbaut, die Al-Verbindung unter Verwendung des RAT beibehalten wird und die neue Al-Verbindung unter Verwendung des mindestens einen anderen RAT aufgebaut wird,
wenn das UE die Al-Verbindungen mit dem Netzwerksystem drahtloser Kommunikation unter Verwendung von ursprünglich mindestens zwei RATs aufbaut, eine Al-Verbindung, die unter Verwendung eines der mindestens zwei RATs aufgebaut wird, beibehalten wird, eine Al-Verbindung, die unter Verwendung eines anderen RATs der mindestens zwei RATs aufgebaut wird, durch das Netzwerksystem drahtloser Kommunikation gelöscht wird und die neue Al-Verbindung unter Verwendung des mindestens einen anderen RATs aufgebaut wird,
wenn der Übertragungsmodus der Übertragung der Steuerebenen-Aufwärtssignalisierung, der durch das Netzwerksystem drahtloser Kommunikation angezeigt wird, eine Einzel-RAT-Diversitätsübertragung ist, ein Senden der Steuerebenen-Aufwärtssignalisierung durch das UE an das Netzwerksystem drahtloser Kommunikation durch die Al-Verbindung, die unter Verwendung eines RAT aufgebaut wird.

5. Vorrichtung zur Steuerung der Übertragung von Steuerebenen-Aufwärtsstreckensignalisierung, die in einem Netzwerksystem drahtloser Kommunikation angewendet wird, welche aufweist:
ein erstes Ressourcenkoordinationsmodul, das ausgestaltet ist, um gemäß Diversitätssendebestimmungsinformationen für ein Mehrfachfunkzugriffsverfahren, RAT, einen Sendemodus zum Senden der Steuerebenen-Aufwärtsstreckensignalisierung eines Benutzergeräts, UE, zu bestimmen, das eine Dienstanforderung sendet, und
ein zweites Ressourcenkoordinationsmodul, das ausgestaltet ist, um den Übertragungsmodus der Übertragung der Steuerebenen-Aufwärtsstreckensignalisierung an das UE anzuzeigen,
wobei die Diversitätssendebestimmungsinformationen für das Mehrfachfunkzugriffsverfahren Diversitätsfähigkeitsinformationen für eine Multi-RAT-Steuerebenen-Aufwärtssignalisierung des UE und eine oder mehrere der folgenden Informationen aufweist:
Typinformationen des UE,
Typinformationen des Benutzers, der die Dienstanforderung durch das UE initiiert,
Diensttypinformationen des Benutzers,
Messberichtsinformationen des UE, und
Diversitätsfähigkeitsinformationen für die Multi-RAT-Steuerebenen-Aufwärtssignalisierung eines Netzwerksystems drahtloser Kommunikation, und
wobei das erste Ressourcenkoordinationsmodul ferner ausgestaltet ist, um die Diversitätsfähigkeitsinformationen für die Multi-RAT-Steuerebenen-Aufwärtssignalisierung des UE und eine oder mehrere der folgenden Informationen über eine Luftschnittstellenverbindung, Al-Verbindung, die mit dem UE unter Verwendung eines RAT hergestellt wird, erfasst
die Typinformationen des UE,
die Typinformationen des Benutzers, der die Dienstanforderung über das UE initiiert, und
die Diensttypinformationen des Benutzers,
wobei das zweite Ressourcenkoordinationsmodul ferner so ausgestaltet ist, dass es, wenn es den Übertragungsmodus der Übertragung der Steuerebenen-Aufwärtsstreckensignalisierung an das UE anzeigt, eine RRC-Verbindung (Radio Resource Control Verbindung) des UE gemäß dem bestimmten Übertragungsmodus der Übertragung der Steuerebenen-Aufwärtsstreckensignalisierung des UE rekonfiguriert,
wobei, wenn der bestimmte Übertragungsmodus des Übertragens der Steuerebenen-Aufwärtsstreckensignalisierung des UE eine Multi-RAT-Diversitätsübertragung ist, das zweite Ressourcenkoordinationsmodul so ausgestaltet ist, dass es die RRC-Verbindung des UE entsprechend dem bestimmten Übertragungsmodus des Übertragens der Steuerebenen-Aufwärtsstreckensignalisierung des UE rekonfiguriert, indem es den folgenden Prozess implementiert:
wenn das Netzwerksystem drahtloser Kommunikation eine Luftschnittstellenverbindung, Air-Interface-Verbindung, Al-Verbindung, mit dem UE unter Verwendung von ursprünglich nur einem RAT herstellt, dass das Netzwerksystem drahtloser Kommunikation die Al-Verbindung unter Verwendung des RAT beibehält und dass es eine neue Al-Verbindung mit dem UE unter Verwendung mindestens eines anderen RAT herstellt, und
wenn das Netzwerksystem drahtloser Kommunikation AI-Verbindungen mit dem UE unter Verwendung von ursprünglich mindestens zwei RATs herstellt, dass das Netzwerksystem drahtloser Kommunikation eine Al-Verbindung beibehält, die mit dem UE unter Verwendung eines der mindestens zwei RATs ursprünglich hergestellt worden, dass es eine Al-Verbindung löscht, die mit dem UE unter Verwendung eines anderen RATs der mindestens zwei RATs ursprünglich hergestellt worden ist, und dass es eine neue Al-Verbindung mit dem UE unter Verwendung mindestens eines anderen RATs herstellt, wobei die Multi-RAT-Diversitätsübertragung bedeutet, dass dieselbe Steuerebenen-Aufwärtsverbindungssignalisierung von dem UE über verschiedene RATs übertragen wird.

6. Vorrichtung nach Anspruch 5, welche ferner aufweist:
ein Steuerebenen-Signalisierungsverarbeitungsmodul, das so ausgestaltet ist, dass es, wenn der bestimmte Übertragungsmodus der Übertragung der Steuerebenen-Aufwärtsstreckensignalisierung des UE die Multi-RAT-Diversitätsübertragung ist, und dass nachdem das zweite Ressourcenkoordinationsmodul den Übertragungsmodus der Übertragung der Steuerebenen-Aufwärtsstreckensignalisierung an das UE anzeigt, über die Al-Verbindungen unter Verwendung von mindestens zwei RATs dieselbe Steuerebenen-Aufwärtsstreckensignalisierung empfängt, die von dem UE gesendet worden ist,
wobei das Steuerebenen-Signalisierungsverarbeitungsmodul ferner so ausgestaltet ist, dass es nach dem Empfangen der gleichen Steuerebenen-Aufwärtsstreckensignalisierung, die von dem UE gesendet worden ist, über die Al-Verbindungen unter Verwendung der mindestens zwei RATs, ein weiches Kombinieren oder ein selektives Kombinieren an der empfangenen Steuerebenen-Aufwärtsstreckensignalisierung durchführt.

7. Vorrichtung zum Übertragen von Steuerebenen-Aufwärtsstreckensignalisierung, die an ein Benutzergerät, UE, angelegt wird, wobei die Vorrichtung aufweist:
ein Empfangsmodul, das so ausgestaltet ist, dass es eine von einem d Netzwerksystem drahtloser Kommunikation gegebene Angabe über einen Übertragungsmodus zum Übertragen der Steuerebenen-Aufwärtsstreckensignalisierung empfängt,
ein Sendemodul, das so ausgestaltet ist, dass es die Steuerebenen-Aufwärtsstreckensignalisierung entsprechend dem Übertragungsmodus der Übertragung der Steuerebenen-Aufwärtsstreckensignalisierung sendet, der von dem Netzwerksystem drahtloser Kommunikation angezeigt wird, und
ein Verbindungsmodul, das so ausgestaltet ist, dass es eine Luftschnittstellenverbindung, Air-Interface-Verbindung, Al-Verbindung, mit dem Netzwerksystem drahtloser Kommunikation unter Verwendung einer Funkzugangstechnologie, Radio Access Technology, RAT, herstellt,
wobei das Sendemodul ferner so ausgestaltet ist, dass es über die Al-Verbindung, die mit dem Netzwerksystem drahtloser Kommunikation unter Verwendung der RAT hergestellt worden ist, Diversitätsfähigkeitsinformationen für die Multi-RAT-Steuerebenen-Aufwärtssignalisierung des UE und eine oder mehrere der folgenden Informationen sendet
Typinformationen des UE,
Typinformationen eines Benutzers, der eine Dienstanforderung über das UE initiiert, und
Diensttypinformationen des Benutzers,
wobei das Netzwerksystem drahtloser Kommunikation den Übertragungsmodus gemäß Diversitätssendebestimmungsinformationen für das Multi-RAT bestimmt, wobei die Diversitätssendebestimmungsinformationen für das Multi-RAT die Diversitätsfähigkeitsinformationen für die Multi-RAT-Steuerebenen-Aufwärtssignalisierung des UE und eine oder mehrere der folgenden Informationen umfassen:
die Typinformationen des UE,
die Typinformationen des Benutzers, der die Dienstanforderung durch das UE initiiert,
die Diensttypinformationen des Benutzers,
Messberichtsinformationen des UE, und
Diversitätsfähigkeitsinformationen für die Multi-RAT-Steuerebenen-Aufwärtssignalisierung eines Netzwerksystems drahtloser Kommunikation,
wobei das Sendemodul ferner ausgestaltet ist, um
wenn der Übertragungsmodus des Übertragens der Steuerebenen-Aufwärtsstreckensignalisierung, der von dem Netzwerksystem drahtloser Kommunikation angezeigt wird, eine Multi-RAT-Diversitätsübertragung ist, die gleiche Steuerebenen-Aufwärtsstreckensignalisierung an das Netzwerksystem drahtloser Kommunikation über die AI-Verbindungen zu senden, die unter Verwendung von mindestens zwei RATs aufgebaut worden sind,
wobei eine der Al-Verbindungen, die unter Verwendung der mindestens zwei RATs aufgebaut werden, eine neue Al-Verbindung ist, die mit dem UE unter Verwendung mindestens eines anderen RATs aufgebaut wird,
wobei, wenn das UE eine Luftschnittstellenverbindung, Air-Interface-Verbindung, Al-Verbindung, mit dem Netzwerksystem drahtloser Kommunikation unter Verwendung von ursprünglich nur einem RAT aufbaut, die Al-Verbindung unter Verwendung des RAT beibehalten wird und die neue Al-Verbindung unter Verwendung des mindestens einen anderen RAT aufgebaut wird,
wenn das UE die Al-Verbindungen mit dem Netzwerksystem drahtloser Kommunikation unter Verwendung von ursprünglich mindestens zwei RATs aufbaut, eine Al-Verbindung, die unter Verwendung eines der mindestens zwei RATs aufgebaut wird, beibehalten wird, eine Al-Verbindung, die unter Verwendung eines anderen RATs der mindestens zwei RATs aufgebaut wird, durch das Netzwerksystem drahtloser Kommunikation gelöscht wird, und die neue Al-Verbindung unter Verwendung des mindestens einen anderen RATs aufgebaut wird, und
wenn der Übertragungsmodus des Übertragens der Steuerebenen-Aufwärtsstreckensignalisierung, der durch das Netzwerksystem drahtloser Kommunikation angezeigt wird, eine Einzel-RAT-Diversitätsübertragung ist, die Steuerebenen-Aufwärtsstreckensignalisierung an das Netzwerksystem drahtloser Kommunikation durch die Al-Verbindung, die unter Verwendung eines RAT aufgebaut wird, zu senden.

## Revendications

1. Procédé pour la commande de la transmission de signalisation de liaison montante de plan de commande, comprenant
la détermination (11), par un système de réseau de communication sans fil en fonction d'informations de détermination de transmission de diversité de technologie d'accès radio, RAT, multiple, d'un mode de transmission pour la transmission de la signalisation de liaison montante de plan de commande d'un Équipement Utilisateur, UE, envoyant une requête de service ; et
l'indication (12), par le système de réseau de communication sans fil, du mode de transmission pour la transmission de la signalisation de liaison montante de plan de commande à l'UE ;
dans lequel les informations de détermination de transmission de diversité multi-RAT comprennent une information de capacité de diversité de signalisation de liaison montante de plan de commande multi-RAT de l'UE et l'une quelconque ou plusieurs des informations suivantes :
information de type de l'UE ;
information de type d'un utilisateur qui initie la requête de service par l'intermédiaire de l'UE ;
information de type de service de l'utilisateur ;
information de rapport de mesure de l'UE ; et
information de capacité de diversité de signalisation de liaison montante de plan de commande multi-RAT d'un réseau de communication sans fil ; et
dans lequel avant la détermination par le système de réseau de communication sans fil, en fonction des informations de détermination de transmission de diversité multi-RAT, du mode de transmission pour la transmission de la signalisation de liaison montante de plan de commande de l'UE envoyant la requête de service, le procédé comprend
l'établissement, par le système de réseau de communication sans fil, d'une connexion d'interface air, AI, avec l'UE à l'aide d'une RAT, et l'acquisition de l'information de capacité de diversité de signalisation de liaison montante de plan de commande multi-RAT de l'UE et de l'une quelconque ou de plusieurs des informations suivantes par l'intermédiaire de la connexion Al :
l'information de type de l'UE ;
l'information de type de l'utilisateur qui initie la requête de service par l'intermédiaire de l'UE ; et
l'information de type de service de l'utilisateur;
dans lequel lors de l'indication du mode de transmission pour la transmission de la signalisation de liaison montante de plan de commande à l'UE, le procédé comprend la reconfiguration, par le système de réseau de communication sans fil, d'une connexion de type gestion des ressources radio, RRC, de l'UE selon le mode de transmission déterminé pour la transmission de la signalisation de liaison montante de plan de commande de l'UE ;
dans lequel lorsque le mode de transmission déterminé pour la transmission de la signalisation de liaison montante de plan de commande de l'UE est une transmission de diversité multi-RAT, l'étape de reconfiguration, par le système de réseau de communication sans fil, de la connexion RRC de l'UE selon le mode de transmission déterminé pour la transmission de la signalisation de liaison montante de plan de commande de l'UE comprend :
lorsque le système de réseau de communication sans fil établit une connexion d'interface air, AI, avec l'UE à l'aide d'une seule RAT initialement, le maintien, par le système de réseau de communication sans fil, de la connexion AI à l'aide de la RAT, et l'établissement d'une nouvelle connexion AI avec l'UE à l'aide d'au moins une autre RAT ;
lorsque le système de réseau de communication sans fil établit des connexions AI avec l'UE à l'aide d'au moins deux RAT initialement, le maintien, par le système de réseau de communication sans fil, d'une connexion AI qui est établie avec l'UE à l'aide de l'une des au moins deux RAT initiales, la suppression d'une connexion AI qui est établie avec l'UE à l'aide d'une autre RAT des au moins deux RAT initiales, et l'établissement d'une nouvelle connexion AI avec l'UE à l'aide d'au moins une autre RAT ; dans lequel la transmission de diversité multi-RAT signifie que la même signalisation de liaison montante de plan de commande est transmise par l'UE par l'intermédiaire de différentes RAT.

2. Procédé selon la revendication 1, comprenant en outre :
lorsque le mode de transmission déterminé pour la transmission de la signalisation de liaison montante de plan de commande de l'UE est la transmission de diversité multi-RAT, et après l'indication par le système de réseau de communication sans fil du mode de transmission pour la transmission de la signalisation de liaison montante de plan de commande à l'UE, la réception, par le système de réseau de communication sans fil par l'intermédiaire des connexions AI à l'aide d'au moins deux RAT, de la même signalisation de liaison montante de plan de commande envoyée par l'UE ; et
après la réception par le système de réseau de communication sans fil, par l'intermédiaire des connexions AI à l'aide des au moins deux RAT, de la même signalisation de liaison montante de plan de commande envoyée par l'UE, la mise en oeuvre, par le système de réseau de communication sans fil, d'une combinaison douce ou d'une combinaison sélective sur la signalisation de liaison montante de plan de commande reçue.

3. Procédé selon la revendication 1, dans lequel lorsque le mode de transmission déterminé pour la transmission de la signalisation de liaison montante de plan de commande de l'UE est une transmission à RAT unique, l'étape de reconfiguration, par le système de réseau de communication sans fil, de la connexion RRC de l'UE selon le mode de transmission déterminé pour la transmission de la signalisation de liaison montante de plan de commande de l'UE comprend :
lorsque le système de réseau de communication sans fil établit une connexion d'interface air, AI, avec l'UE à l'aide d'une seule RAT initialement, le maintien, par le système de réseau de communication sans fil, de la connexion AI ;
lorsque le système de réseau de communication sans fil établit des connexions AI avec l'UE à l'aide d'au moins deux RAT initialement, le maintien, par le système de réseau de communication sans fil, d'une connexion AI qui est établie avec l'UE à l'aide de l'une des au moins deux RAT initiales et la suppression des connexions Al qui sont établies avec l'UE à l'aide d'autres RAT parmi les au moins deux RAT initiales,
dans lequel le procédé comprend en outre :
lorsque le mode de transmission déterminé pour la transmission de la signalisation de liaison montante de plan de commande de l'UE est la transmission à RAT unique, et après l'indication par le système de réseau de communication sans fil du mode de transmission pour la transmission de la signalisation de liaison montante de plan de commande à l'UE, la réception, par le système de réseau de communication sans fil par l'intermédiaire de la connexion AI maintenue à l'aide d'une RAT, de la signalisation de liaison montante de plan de commande envoyée par l'UE.

4. Procédé pour la transmission de signalisation de liaison montante de plan de commande, comprenant :
la réception (21), par un Équipement Utilisateur, UE, d'une indication, qui est donnée par un système de réseau de communication sans fil, sur un mode de transmission pour la transmission de la signalisation de liaison montante de plan de commande ; et
l'envoi (22), par l'UE, de la signalisation de liaison montante de plan de commande selon le mode de transmission pour la transmission de la signalisation de liaison montante de plan de commande qui est indiqué par le système de réseau de communication sans fil ;
le procédé comprenant en outre :
avant la réception par l'UE de l'indication, qui est donnée par le système de réseau de communication sans fil, sur le mode de transmission pour la transmission de la signalisation de liaison montante de plan de commande, l'établissement, par l'UE, d'une connexion d'interface air, AI, avec le système de réseau de communication sans fil à l'aide d'une technologie d'accès radio, RAT, et la transmission d'une information de capacité de diversité de signalisation de liaison montante de plan de commande multi-RAT de l'UE et de l'une quelconque ou de plusieurs des informations suivantes au système de réseau de communication sans fil par l'intermédiaire de la connexion AI :
information de type de l'UE ;
information de type d'un utilisateur qui initie une requête de service par l'intermédiaire de l'UE ; et
information de type de service de l'utilisateur ;
dans lequel le mode de transmission est déterminé par le système de réseau de communication sans fil en fonction d'informations de détermination de transmission de diversité de technologie d'accès radio, RAT, multiple, les informations de détermination de transmission de diversité multi-RAT comprenant l'information de capacité de diversité de signalisation de liaison montante de plan de commande multi-RAT de l'UE et l'une quelconque ou plusieurs des informations suivantes :
l'information de type de l'UE ;
l'information de type de l'utilisateur qui initie la requête de service par l'intermédiaire de l'UE ;
l'information de type de service de l'utilisateur;
information de rapport de mesure de l'UE ; et
information de capacité de diversité de signalisation de liaison montante de plan de commande multi-RAT d'un réseau de communication sans fil ;
dans lequel l'envoi, par l'UE, de la signalisation de liaison montante de plan de commande selon le mode de transmission pour la transmission de la signalisation de liaison montante de plan de commande qui est indiqué par le système de réseau de communication sans fil comprend :
lorsque le mode de transmission pour la transmission de la signalisation de liaison montante de plan de commande qui est indiqué par le système de réseau de communication sans fil est une transmission de diversité multi-RAT, l'envoi, par l'UE, de la même signalisation de liaison montante de plan de commande au système de réseau de communication sans fil par l'intermédiaire des connexions Al qui sont établies à l'aide d'au moins deux RAT,
dans lequel l'une des connexions Al qui sont établies à l'aide des au moins deux RAT est une nouvelle connexion AI établie avec l'UE à l'aide d'au moins une autre RAT,
dans lequel lorsque l'UE établit une connexion d'interface air, AI, avec le système de réseau de communication sans fil à l'aide d'une seule RAT initialement, la connexion AI à l'aide de la RAT est maintenue, et la nouvelle connexion AI est établie à l'aide de l'au moins une autre RAT, lorsque l'UE établit les connexions AI avec le système de réseau de communication sans fil à l'aide d'au moins deux RAT initialement, une connexion AI qui est établie à l'aide de l'une des au moins deux RAT initiales est maintenue, une connexion Al qui est établie à l'aide d'une autre RAT des au moins deux RAT initiales est supprimée, par le système de réseau de communication sans fil, et la nouvelle connexion Al est établie à l'aide de l'au moins une autre RAT,
et
lorsque le mode de transmission pour la transmission de la signalisation de liaison montante de plan de commande qui est indiqué par le système de réseau de communication sans fil est une transmission de diversité à RAT unique, l'envoi, par l'UE, de la signalisation de liaison montante de plan de commande au système de réseau de communication sans fil par l'intermédiaire de la connexion AI qui est établie à l'aide d'une RAT.

5. Dispositif de commande de la transmission de signalisation de liaison montante de plan de commande, qui est appliqué à un système de réseau de communication sans fil, comprenant :
un premier module de coordination de ressources configuré pour déterminer, en fonction d'informations de détermination de transmission de diversité de technologie d'accès radio, RAT, multiple, un mode de transmission pour la transmission de la signalisation de liaison montante de plan de commande d'un Équipement Utilisateur, UE, envoyant une requête de service ; et
un deuxième module de coordination de ressources configuré pour indiquer le mode de transmission pour la transmission de la signalisation de liaison montante de plan de commande à l'UE ;
dans lequel les informations de détermination de transmission de diversité multi-RAT comprennent une information de capacité de diversité de signalisation de liaison montante de plan de commande multi-RAT de l'UE et l'une quelconque ou plusieurs des informations suivantes :
information de type de l'UE ;
information de type de l'utilisateur qui initie la requête de service par l'intermédiaire de l'UE ;
information de type de service de l'utilisateur ;
information de rapport de mesure de l'UE ; et
information de capacité de diversité de signalisation de liaison montante de plan de commande multi-RAT d'un réseau de communication sans fil ; et
dans lequel le premier module de coordination de ressources est en outre configuré pour acquérir une information de capacité de diversité de signalisation de liaison montante de plan de commande multi-RAT de l'UE et l'une quelconque ou plusieurs des informations suivantes par l'intermédiaire d'une connexion d'interface air, AI, établie avec l'UE à l'aide d'une RAT :
l'information de type de l'UE ;
l'information de type de l'utilisateur qui initie la requête de service par l'intermédiaire de l'UE ; et
l'information de type de service de l'utilisateur;
dans lequel le deuxième module de coordination de ressources est en outre configuré pour, lors de l'indication du mode de transmission pour la transmission de la signalisation de liaison montante de plan de commande à l'UE, reconfigurer une connexion de type gestion des ressources radio, RRC, de l'UE selon le mode de transmission déterminé pour la transmission de la signalisation de liaison montante de plan de commande de l'UE ;
dans lequel lorsque le mode de transmission déterminé pour la transmission de la signalisation de liaison montante de plan de commande de l'UE est une transmission de diversité multi-RAT, le deuxième module de coordination de ressources est configuré pour reconfigurer la connexion RRC de l'UE selon le mode de transmission déterminé pour la transmission de la signalisation de liaison montante de plan de commande de l'UE en mettant en oeuvre le procédé suivant :
lorsque le système de réseau de communication sans fil établit une connexion d'interface air, AI, avec l'UE à l'aide d'une seule RAT initialement, le système de réseau de communication sans fil maintient la connexion AI à l'aide de la RAT, et établit une nouvelle connexion AI avec l'UE à l'aide d'au moins une autre RAT ; et
lorsque le système de réseau de communication sans fil établit des connexions AI avec l'UE à l'aide d'au moins deux RAT initialement, le système de réseau de communication sans fil maintient une connexion AI qui est établie avec l'UE à l'aide de l'une des au moins deux RAT initiales, supprime une connexion AI qui est établie avec l'UE à l'aide d'une autre RAT parmi les au moins deux RAT initiales, et établit une nouvelle connexion AI avec l'UE à l'aide d'au moins une autre RAT ; dans lequel la transmission de diversité multi-RAT signifie que la même signalisation de liaison montante de plan de commande est transmise par l'UE par l'intermédiaire de différentes RAT.

6. Dispositif selon la revendication 5, comprenant en outre :
un module de traitement de signalisation de liaison montante configuré pour, lorsque le mode de transmission déterminé pour la transmission de la signalisation de liaison montante de plan de commande de l'UE est la transmission de diversité multi-RAT, et après l'indication par le deuxième module de coordination de ressources du mode de transmission pour la transmission de la signalisation de liaison montante de plan de commande à l'UE, recevoir, par l'intermédiaire des connexions AI à l'aide d'au moins deux RAT, la même signalisation de liaison montante de plan de commande envoyée par l'UE,
dans lequel le module de traitement de signalisation de liaison montante est en outre configuré pour, après la réception, par l'intermédiaire des connexions AI à l'aide des au moins deux RAT, de la même signalisation de liaison montante de plan de commande envoyée par l'UE, mettre en oeuvre une combinaison douce ou une combinaison sélective sur la signalisation de liaison montante de plan de commande reçue.

7. Dispositif de transmission de signalisation de liaison montante de plan de commande, qui est appliqué à un Équipement Utilisateur, UE, le dispositif comprenant :
un module de réception configuré pour recevoir une indication, qui est donnée par un système de réseau de communication sans fil, sur un mode de transmission pour la transmission de la signalisation de liaison montante de plan de commande ;
un module d'envoi configuré pour envoyer la signalisation de liaison montante de plan de commande selon le mode de transmission pour la transmission de la signalisation de liaison montante de plan de commande qui est indiqué par le système de réseau de communication sans fil ; et
un module de connexion configuré pour établir une connexion d'interface air, AI, avec le système de réseau de communication sans fil à l'aide d'une technologie d'accès radio, RAT ;
dans lequel le module d'envoi est en outre configuré pour envoyer une information de capacité de diversité de signalisation de liaison montante de plan de commande multi-RAT de l'UE et l'une quelconque ou plusieurs des informations suivantes par l'intermédiaire de la connexion AI établie avec le système de réseau de communication sans fil à l'aide de la RAT :
information de type de l'UE ;
information de type d'un utilisateur qui initie la requête de service par l'intermédiaire de l'UE ; et
information de type de service de l'utilisateur ;
dans lequel le système de réseau de communication sans fil détermine le mode de transmission en fonction d'informations de détermination de transmission de diversité de technologie d'accès radio, RAT, multiple, les informations de détermination de transmission de diversité multi-RAT comprenant l'information de capacité de diversité de signalisation de liaison montante de plan de commande multi-RAT de l'UE et l'une quelconque ou plusieurs des informations suivantes :
l'information de type de l'UE ;
l'information de type de l'utilisateur qui initie une requête de service par l'intermédiaire de l'UE ;
l'information de type de service de l'utilisateur;
information de rapport de mesure de l'UE ; et
information de capacité de diversité de signalisation de liaison montante de
plan de commande multi-RAT d'un réseau de communication sans fil ;
dans lequel le module d'envoi est en outre configuré pour,
lorsque le mode de transmission pour la transmission de la signalisation de liaison montante de plan de commande qui est indiqué par le système de réseau de communication sans fil est une transmission de diversité multi-RAT, envoyer la même signalisation de liaison montante de plan de commande au système de réseau de communication sans fil par l'intermédiaire des connexions Al qui sont établies à l'aide d'au moins deux RAT,
dans lequel l'une des connexions Al qui sont établies à l'aide des au moins deux RAT est une nouvelle connexion AI établie avec l'UE à l'aide d'au moins une autre RAT,
dans lequel lorsque l'UE établit une connexion d'interface air, Al, avec le système de réseau de communication sans fil à l'aide d'une seule RAT initialement, la connexion Al utilisant la RAT est maintenue, et la nouvelle connexion Al est établie à l'aide de l'au moins une autre RAT, lorsque l'UE établit les connexions AI avec le système de réseau de communication sans fil à l'aide d'au moins deux RAT initialement, une connexion Al qui est établie à l'aide de l'une des au moins deux RAT initiales est maintenue, une connexion Al qui est établie à l'aide d'une autre RAT parmi les au moins deux RAT initiales est supprimée, par le système de réseau de communication sans fil, et la nouvelle connexion AI est établie à l'aide de l'au moins une autre RAT,
et
lorsque le mode de transmission pour la transmission de la signalisation de liaison montante de plan de commande qui est indiqué par le système de réseau de communication sans fil est une transmission de diversité à RAT unique, envoyer la signalisation de liaison montante de plan de commande au système de réseau de communication sans fil par l'intermédiaire de la connexion Al qui est établie à l'aide d'une RAT.
